Europäisches Patentamt

European Patent Office

Office européen des brevets

(19)

(11) Publication number: **0 122 462**
**B1**

# (12) EUROPEAN PATENT SPECIFICATION

(45) Date of publication of patent specification: **31.08.88**

(51) Int. Cl.⁴: **B 61 L 3/18**

(21) Application number: **84102777.4**

(22) Date of filing: **14.03.84**

(54) **Railway vehicle control apparatus and railway system having regenerative control.**

(30) Priority: **17.03.83 JP 46331/83**

(43) Date of publication of application:
**24.10.84 Bulletin 84/43**

(45) Publication of the grant of the patent:
**31.08.88 Bulletin 88/35**

(84) Designated Contracting States:
**DE FR GB**

(56) References cited:
**FR-A-2 345 308**
**FR-A-2 364 155**
**FR-A-2 399 349**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Koyama, Shigeru c/o Mitsubishi Denki K.K.**
**Itami Works No. 1-1, Tsukaguchi Honmachi 8-chome**
**Amagasaki-shi Hyogo (JP)**

(74) Representative: **Lehn, Werner, Dipl.-Ing. et al Hoffmann, Eitle & Partner Patentanwälte**
**Arabellastrasse 4**
**D-8000 München 81 (DE)**

Courier Press, Leamington Spa, England.

# Description

This invention relates to railway vehicle control apparatus. Such apparatus is known from GB—A—1532125 (≡FR—A—2345308) and from GB—A—1560266 (≡FR—A—2364155).

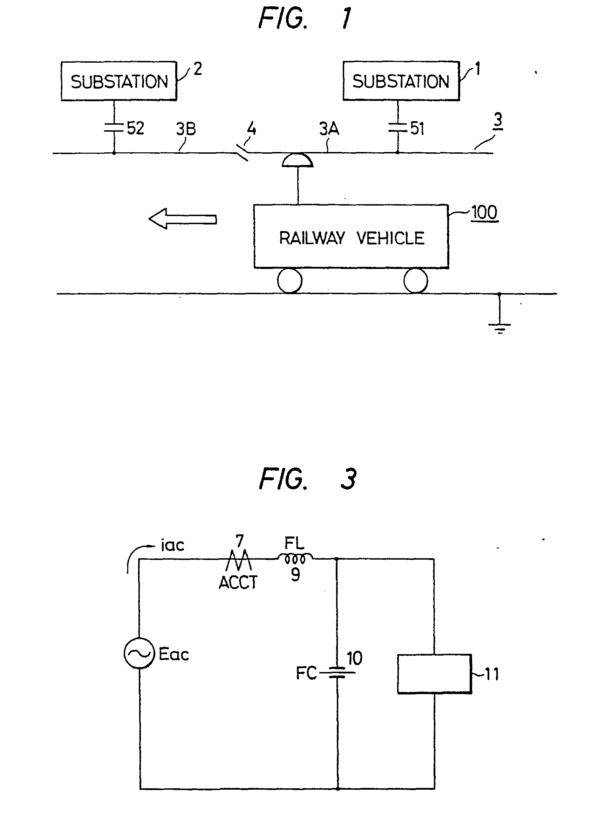

Figure 1 of the accompanying drawings shows an electric railway system including an overhead third rail 3 for supplying power to a vehicle 100. The third rail is divided into sections 3A and 3B at a change-over point 4, and DC power is supplied to these third rail sections from individual substations 1 and 2 through switches 51 and 52, respectively. As is well known in the art, the substations 1 and 2 are individually isolated from the respective third rail sections 3A and 3B by the switches 51 or 52 when troubles such as ground faults occur along said sections. The switches are independently actuated in response to such faults by conventional protective devices, not shown. Assume that the third rail section 3A is energized normally from the substation 1 while the third rail section 3B is deenergized because the switch 52 has been opened due to a ground fault or the like. If the railway vehicle 100 is operating in a regenerative braking mode and enters the section 3B under such a condition, the regenerative power supplied by the vehicle will be fed into the section 3B and have the unwanted effect of increasing the magnitude of the ground fault. This is a significant drawback of such conventional railway vehicle control apparatuses.

An object of the present invention is thus to provide a railway vehicle control apparatus in which regenerative braking will cease when the vehicle is moving along a deenergized third rail section which has been disconnected from the power supply system due to a ground fault or the like having occurred. This object is accomplished according to one aspect of the invention by providing a railway vehicle control apparatus comprising a controller for controlling the main electric motors of the vehicle, means for sensing AC components in the current flowing through the power supply circuit of the vehicle, and detector means for determining whether said sensed components contain an AC ripple frequency generated by a substation. If no such ripple frequency is detected the controller is actuated to disable regenerative braking, thereby preventing exacerbation of the fault.

According to a further aspect of the invention, there is provided an electric railway system including track means, a railway vehicle movable on said track means, a plurality of spaced substations for individually supplying rectified DC power containing an AC ripple frequency component to associated third rail sections electrically insulated from each other, a plurality of switch means for individually disconnecting the substations from their associated third rail sections in response to ground faults or the like, propulsive motor-generator means within the vehicle, collector means in wiping contact with a said third rail section for coupling electrical power to and from a power supply line of the vehicle, and a controller in the vehicle for controlling the motor-generator means in either a drive motor or a regenerative braking mode, characterised by: a) means operatively associated with the vehicle power supply line for sensing the presence of AC signals; and b) means responsive to the sensing means for detecting whether or not sensed AC signals include an AC ripple frequency component from a substation and for actuating the controller to disable regenerative braking in the absence of such an AC ripple frequency component.

For a better understanding of the invention, and to show how the same may be carried into effect, reference will now be made, by way of example, to the accompanying drawings, in which:

Figure 1 is a schematic diagram of a conventional electric railway system;

Figure 2 is a schematic diagram of a railway vehicle control apparatus in accordance with the present invention; and

Figure 3 is an equivalent circuit diagram of the schematic view shown in Figure 2.

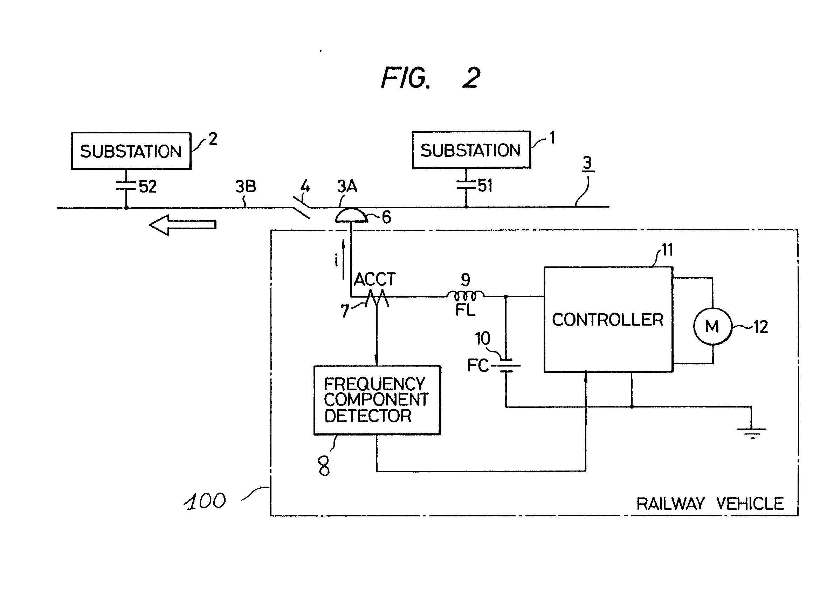

Figure 2 shows one embodiment of the present invention, wherein substations 1 and 2 supply power to third rail sections 3A and 3B through switches 51 and 52, respectively. Generally, a commercial frequency three-phase voltage supplied to each substation is reduced by a step-down transformer and then converted into a DC voltage. This converted DC voltage is fed into the third rail by the substation, and hence the DC current supplied to the railway vehicle 100 through the third rail 3 always contains an AC component whose frequency is six, twelve, twenty-four, etc. times as high as the commercial frequency.

A railway vehicle 100 has main motors 12 controlled by a controller 11, which may be a chopper controller as is well known. The controller 11 is connected to a power collector 6, such as a pantograph wiper, through a filter circuit including a reactor 9 and a capacitor 10. An AC current transformer 7 coupled to the power supply circuit in the vehicle 100 senses the AC components contained in the DC current flowing through said power supply circuit. A frequency component detector 8, which may comprise appropriate band pass filters whose outputs are rectified and thresholded, receives the output of the transformer 7 and detects whether said output contains a frequency component substantially equal to the frequency of the AC ripple component contained in the DC current supplied from the substation. When no such ripple frequency component is present, which would indicate a substation disconnect, the frequency component detector 8 actuates the controller 11 to crease regenerative braking operation if such is in progress.

Assuming that the vehicle 100 is in the regenerative mode of operation regenerated current i flows to the third rail 3 through the collector 6. The AC current transformer 7 senses any AC components in the current i and feeds its output to the frequency component detector 8. Such regenerated current will not, however, contain any ripple components or harmonics of the substation commercial frequency if the substation is disconnected, and will thus effect the fault disabling operation described above.

Figure 3 shows an equivalent circuit of the schematic diagram shown in Figure 2, wherein a filter reactor 9, filter capacitor 10 and controller 11 are connected as impedance loads to an AC source Eac representing the ripple component in the DC current fed from the substation. The corresponding AC current component $i_{ac}$ consequently flows in the impedance circuit. Thus, the AC component detected by the current transformer 7 will contain the AC ripple component whose frequency is six, twelve, twenty-four, etc. times as high as the commercial frequency. When the railway vehicle 100 provided with the control apparatus thus arranged is moving in the regenerating mode of operation along the third rail section 3A which is normally energized by the substation 1 through the switch 51, the AC ripple current flows in the power supply circuit of the vehicle, whereas in the third rail section 3B which is deenergized through the opened switch 52 due to a fault the AC ripple current is not present. The detector 8 then detects the output of the transformer 7 to determine whether it contains a frequency component substantially equal to the AC ripple component in the DC current fed by the substation, and when no such ripple frequency is present the detector will actuate the controller 11 to cease the regenerative braking operation. As a result no regenerative power is applied to the deenergized rail section 3B and the fault is prevented from becoming worse.

Thus, according to the invention in its broadest aspect, railway vehicle control apparatus is provided which automatically interrupts regenerative braking in a direct-current power supply system when the vehicle is moving along a deenergized third rail section.

## Claims

1. An apparatus operative with a railway vehicle D.C. power supply system including a substation (1, 2), said apparatus being provided (1, 2) for controlling the power regeneration operation of a railway vehicle (100) moving along a track, said apparatus comprising a controller (11) for controlling main electric motors (12) of said vehicle (100), characterised by:

sensing means (7) for sensing an A.C. component contained in a current flowing through the power supply line (6) of said vehicle (100); and

means (8) for determining whether said sensed A.C. component contains a frequency substantially equal to the frequency of an A.C. ripple component normally contained in DC-current supplied from the substation 1, 2), and for preventing said controller (11) from effecting regenerative braking when said sensed component does not contain said A.C. ripple frequency component.

2. Apparatus in accordance with claim 1 characterised in that said sensing means (7) in an A.C. current transformer.

3. Apparatus in accordance with claim 1 or 2 characterised in that said detector means (8) is a frequency component detector.

4. A railway vehicle characterised by apparatus according to any one of claims 1 to 3.

5. An electric railway system including track means, a railway vehicle (100) movable on said track means, a plurality of spaced substations (1, 2) for individually supplying rectified DC power containing an AC ripple frequency component to associated third rail sections (3A, 3B) electrically insulated from each other, a plurality of switch means (51, 52) for individually disconnecting the substations from their associated third rail sections in response to ground faults or the like, propulsive motor-generator means (12) within the vehicle, collector means (6) in wiping contact with a said third rail section for coupling electrical power to and from a power supply line of the vehicle (100), and a controller (11) in the vehicle (100) for controlling the motor-generator means (12) in either a drive mode or a regenerative braking mode, characterised by:

a) means (7) operatively associated with the vehicle power supply line for sensing the presence of AC signals; and

b) means (8) responsive to the sensing means (7) for detecting whether or not sensed AC signals include an AC ripple frequency component from a substation (1, 2) and for actuating the controller (11) to disable regenerative braking in the absence of such an AC ripple frequency component.

6. A system according to claim 5 characterised in that the sensing means (7) comprises a current transformer.

7. A system according to claim 5 or 6 characterised in that the detecting and actuating means (8) comprises a frequency component detector.

## Patentansprüche

1. Vorrichtung, die mit einem Eisenbahnfahrzeuggleichspannungsversorgungssystem mit einer Schaltstation (1, 2) arbeitet, zum Steuern des Energierückgewinungsbetriebs eines entlang einem Gleis fahrenden Eisenbahnfahrzeugs (100), wobei die Vorrichtung eine Steuervorrichtung (11) zum Steuern von Hauptelektromotoren (12) des Fahrzeugs (100) enthält, gekennzeichnet durch

Erfassungsmittel (7) zum Erfassen einer Wechselspannungskomponente, die in einem durch die Energieversorgungsleitung (6) des Fahrzeugs (100) fließenden Strom enthalten ist; und

Mittel (8) zum Feststellen, ob die erfaßte Wechselstromkomponente eine Frequenz im wesentlichen gleich der Frequenz einer Wechselstromrestwelligkeitskomponente enthält, die normalwerweise in vor der Schaltstation (1, 2) zugeführtem Gleichstrom enthalten ist, und zum Verhindern, daß die Steuervorrichtung (11) Nutzbremsen bewirkt, wenn die erfaßte Komponente die Wechselstromrestwelligkeitsfrequenzkomponente nicht enthält.

2. Vorrichtung nach Anspruch 1, dadurch gekennzeichnet, daß die Erfassungsmittel (7) ein Wechselstromwandler sind.

3. Vorrichtung nach Anspruch 1 oder 2, dadurch gekennzeichnet, daß die Erfassungsmittel (8) ein Frequenzkomponentendetektor sind.

4. Eisenbahnfahrzeug, gekennzeichnet durch eine Vorrichtung nach einem der Ansprüche 1 bis 3.

5. Elektrisches Eisenbahnsystem mit Gleismitteln, einem auf den Gleismitteln bewegbaren Eisenbahnfahrzeug (100), einer Vielzahl von mit Abstand zueinander angeordneten Schaltstationen (1, 2) zum individuellen Zuführen von gleichgerichteter Gleichstromenergie, die eine Wechselstromrestwelligkeitsfrequenzkomponente enthält, zu zugeordneten dritten Schienenabschnitten (3, 3b), die elektrisch voneinander isoliert sind, einer Vielzahl von Schaltmitteln (51, 52) zum individuellen Trennen der Schaltstationen von ihren zugeordneten dritten Schienenabschnitten im Ansprechen auf Erdfehler oder dgl., einer antreibenden Motorgeneratorvorrichtung (12) innerhalb des Fahrzeugs, einer Auffangvorrichtung (6) in Wischkontakt mit einem dritten Schienenabschnitt zum Koppeln von elektrischer Energie mit und von einer Energieversorgungsleitung des Fahrzeugs (100), und einer Steuervorrichtung (11) in dem Fahrzeug (100) zum Steuern der Motorgeneratorvorrichtung (12) in entweder einem Antriebsmodus oder einem Nutzbremsmodus, gekennzeichnet durch

a) Mittel (7), die der Fahrzeugenergieversorgungsleitung zum Betrieb zugeordnet sind, zum Erfassen des Vorhandenseins von Wechselspannungssignalen; und

b) auf die Erfassungsmittel (7) ansprechende Mittel (8) zum Feststellen, ob erfaßte Wechselspannungssignale eine Wechselstromrestwelligkeitsfrequenzkomponente von einer Schaltstation (1, 2) enthalten oder nicht, und zum Betätigen der Steuervorrichtung (11) zum Abschalten des Nutzbremsens, wenn eine derartige Wechselstromrestwelligkeitsfrequenzkomponente fehlt.

6. System nach Anspruch 5, dadurch gekennzeichnet, daß die Erfassungsmittel (7) einen Stromwandler enthalten.

7. System nach Anspruch 5 oder 6, dadurch gekennzeichnet, daß die Feststellungs- und Betätigungsmittel (8) einen Frequenzkomponentendetektor enthalten.

**Revendications**

1. Un appareil fonctionnant avec un système d'alimentation électrique, en courant continu pour véhicule de chemin der fer, comprenant des sous-stations (1, 2), ledit appareil ayant pour fonction de commander l'opération de régénération du courant d'un véhicule de chemin de fer (100) se déplaçant le long d'une voie, ledit appareil comprenant un organe de commande (11) pour commander les moteurs électriques principaux (12) dudit véhicule (100), caractérisé par:

un dispositif de détection (7) pour détecter une composante en courant alternatif circulant par l'intermédiaire de la ligne (6) d'alimentation en courant électrique dudit véhicule (100); et

un dispositif (8) pour déterminer si ladite composante en courant alternatif détectée contient une fréquence sensiblement égale à la fréquence d'une composante d'ondulation normalement contenue dans le courant continu transmis par la sous-station (1, 2), et pour éviter que ledit organe de commande (11) n'effectue un freinage régénérateur lorsque ladite composante détectée ne contient pas ladite composante de fréquence d'ondulation en courant alternatif.

2. Un appareil selon la revendication 1 caractérisé par le fait que ledit dispositif de détection (7) est un transformateur de courant alternatif.

3. Un appareil selon la revendication 1 ou 2 caractérisé par le fait que ledit dispositif de détection (8) est un détecteur de composante de fréquence.

4. Un véhicule de chemin de fer caractérisé par l'appareil selon l'importe laquelle des revendications 1 à 3.

5. Un système de chemin de fer électrique comportant un dispositif de voies, un véhicule de chemin de fer (100) pouvant se séplacer sur ledit dispositif de voies, plusieurs sous-stations (1, 2) espacées les unes des autres pour transmettre un courant continu redressé contenant une fréquence d'ondulation en courant alternatif aux sections (3A, 3B) du troisième rail qui leur sont associées, ces sections de troisième rail étant électriquement isolées les unes des autres, plusieurs dispositifs de commutation (51, 52) pour désaccoupler individuellement les sous-stations de leur section du troisième rail, en réponse à des défauts de mise à la terre ou à tout autre défaut du même type, un moteur-générateur de propulsion (12) à l'intérieur du véhicule, un collecteur (6) balayant une desdites sections du troisième rail pour coupler le courant électrique avec une ligne d'alimentation en courant du véhicule (100) et à partir de celle-ci, et un organe de commande (11) à l'intérieur du véhicule (100) pour commander le moteur-générateur (12) soit dans un mode d'entrainement soit dans un mode de freinage régénérateur, caractérisé par:

a) un dispositif (7) dont le fonctionnement est associé avec la ligne d'alimentation en énergie du véhicule pour détecter la présence de signaux en courant alternatif; et

b) un dispositif (8) répondant au dispositif de détection (7) pour détecter si les signaux en courant alternatif détectés comportent ou non une composante de fréquence d'ondulation en courant alternatif provenant d'une sous-station (1, 2), et pour mettre l'organe de commande (11) en marche afin de mettre le système de freinage régénérateur hors service, lorsque cette compo-

sante de fréquence d'ondulation en courant alternatif est inexistante.

6. Un système d'après la revendication 5 caractérisé par le fait que le dispositif de détection (7) comprend un transformateur de courant.

7. Un système d'après la revendication 5 ou 6 caractérisé par le fait que le dispositif de détection et de mise en marche (8) comprend un détecteur de composante de fréquence.

## FIG. 1

SUBSTATION 2

SUBSTATION 1

52  3B  4  3A  51  3

← RAILWAY VEHICLE 100

## FIG. 3

iac  7  FL

ACCT  9

Eac

FC 10

11

# FIG. 2

SUBSTATION 2

SUBSTATION 1

52    3B    4    3A    51    3

6

i

ACCT

7    9 FL    10 FC    CONTROLLER 11    M 12

FREQUENCY COMPONENT DETECTOR

8

100    RAILWAY VEHICLE